# EUROPÄISCHE PATENTSCHRIFT

(11) **EP 2 229 304 B1**
(45) Veröffentlichungstag und Bekanntmachung des Hinweises auf die Patenterteilung: **24.08.2011**
(21) Anmeldenummer: 08869441.9
(22) Anmeldetag: 08.12.2008
(51) Int. Cl.: B60W 30/18, B60K 6/48

(54) **VERFAHREN ZUR ERMITTLUNG DES ANFAHRMOMENTES BEI EINEM HYBRIDFAHRZEUG**
METHOD FOR DETERMINING THE STARTING TORQUE IN A HYBRID VEHICLE
PROCÉDÉ DE DÉTERMINATION DU MOMENT DE DÉMARRAGE DANS UN VÉHICULE HYBRIDE

(30) Priorität: 09.01.2008 DE 102008000014
(43) Veröffentlichungstag der Anmeldung: 22.09.2010
(73) Patentinhaber: ZF Friedrichshafen AG, 88038 Friedrichshafen (DE)
(72) Erfinder: BACHMANN, Max, 88339 Bad Waldsee (DE); BORNTRÄGER, Kai, 88085 Langenargen (DE)
(86) Internationale Anmeldenummer: PCT/EP2008/066982
(87) Internationale Veröffentlichungsnummer: WO 2009/087003

(56) Entgegenhaltungen:
- EP-A- 1 584 531
- EP-A- 1 630 054
- DE-A1- 10 221 835
- US-A- 5 427 196
- US-A1- 2004 099 454

## Beschreibung

Die vorliegende Erfindung bezieht sich auf ein Verfahren zur Ermittlung des Anfahrmomentes bei einem Hybridfahrzeug umfassend einen Verbrennungsmotor und eine Elektromaschine, wobei der Verbrennungsmotor vom Antriebsstrang durch Öffnen einer Kupplung abkoppelbar ist, gemäß dem Oberbegriff des Patentanspruchs 1.

Aus dem Stand der Technik sind derartige Fahrzeuge bekannt. Sie umfassen einen Verbrennungsmotor und zumindest eine Elektromaschine, die in dieser Reihenfolge hintereinander geschaltet sind, wobei der Verbrennungsmotor durch Öffnen einer Kupplung von der elektrischen Maschine und somit vom Antriebsstrang abkoppelbar ist; hierbei ist Getriebeeingang mit dem Abtrieb der Elektromaschine bzw. eines Summierungsgetriebes, in dem die Momente der Elektromaschine und des Verbrennungsmotors aufsummiert werden, verbunden oder mittels einer weiteren Kupplung lösbar verbindbar.

Zur Ermittlung des erforderlichen Anfahrmomentes zur Schaltoptimierung wird die Kenntnis der Steigung der Fahrstrecke benötigt; aus dem Stand der Technik ist beispielsweise bekannt, die Steigung der Fahrstrecke mittels Neigungssensoren zu ermitteln. Alternativ dazu ist bekannt, das Anfahrmoment anhand einer Massenbestimmung des Fahrzeugs mittels Verzögerungswerten und Antriebsmomente dynamisch zu bestimmen. Beispielsweise ist aus der DE 19728867 A1 ist ein Verfahren und eine Vorrichtung zur Ermittlung der Masse eines Fahrzeugs bekannt. Hierbei ist eine Erfassung wenigstens eines ersten und eines zweiten Beschleunigungswertes vorgesehen, wobei diese Beschleunigungswerte die Fahrzeugbeschleunigung zu einem ersten und einem zweiten Zeitpunkt repräsentieren.

Des weiteren werden zum ersten und zum zweiten Zeitpunkt ein erster und ein zweiter Antriebswert (Antriebskraft oder Antriebsmoment) erfasst, wobei in Abhängigkeit von den erfassten Beschleunigungswerten und den erfassten Antriebswerten wenigstens ein erster und ein zweiter Fahrwiderstands- oder Massenschätzwert bestimmt werden. Bei dem bekannten Verfahren ist vorgesehen, dass die Ermittlung der Masse des Fahrzeugs anhand eines Vergleichs des bestimmten ersten Fahrwiderstands- oder Massenschätzwerts mit dem bestimmten zweiten Fahrwiderstands- oder Massenschätzwert erfolgt. Hierbei wird durch diesen Vergleich eine Fahrbahnneigung erfasst, wodurch eine durch die Fahrbahnneigung bedingte fehlerhafte Massenbestimmung vermieden wird.

Im Rahmen der DE10235969A1 der Anmelderin wird ein Verfahren und eine Vorrichtung zur Steuerung eines Getriebes für ein Kraftfahrzeug mit einem elektronischen Steuergerät zur Einstellung einer einer aktuellen Fahrsituation angepassten Übersetzung vorgeschlagen, im Rahmen dessen Mittel zur Ermittlung eines Fahrwiderstandes mittels eines aktuellen Momentüberschusses und einer dabei vorliegenden Fahrzeugbeschleunigung in Abhängigkeit eines von einem Neigungssensor gelieferten, eine Fahrbahnneigungsgröße repräsentierenden Signals und Mittel zur Bestimmung einer Fahrzeugmasse durch Vergleich einer aktuellen Momentenüberschuß-Fahrzeugbeschleunigung-Beziehung mit einer für eine bestimmte Fahrzeugmasse definierten, als Kennfeld oder mathematische Formel in dem elektronischen Steuergerät abgelegten Momentenüberschuß-Fahrzeugbeschieunigungs-Kenntinie aufweist.

In der US2004099454A1 ist ein Verfahren zur Bestimmung des Drehmomentes beschrieben, das erforderlich ist, um Hybridkraftfahrzeug in Bewegung zu setzen, sowie ein Verfahren zur Steuerung der Betriebsweise des Hybridantriebsstrangs entsprechend dem erforderlichen Drehmoment. Hierbei erfolgt eine Berechnung des Anfahrmomentes unter anderem aus Steigung und Gewicht.

In der DE10221835A1 ist ein Verfahren zur Regelung einer Elektromaschine eines Hybridkraftfahrzeuges im Kriechmodus angegeben, wobei ein Kriechmoment-Sollwert an der Elektromaschine eingestellt wird, der in Abhängigkeit von Umgebungsbedingungen, wie beispielsweise die aktuelle Neigung des Kraftfahrzeuges eingestellt wird.

In der EP1630054A ist ein Verfahren zur Realisierung einer elektronischen Rollsperre für Kraftfahrzeuge mit automatischer oder automatisierter Kupplung beschrieben. Hierbei wird ein Kriechmoment im Stillstand des Kraftfahrzeugs ohne Bremsbetätigung bestimmt.

In der EP1584531A ist ein Verfahren zur Anfahrhilfe eines Kraftfahrzeugs mit einer automatischen Standbremse angegeben, bei dem bei Betätigung einer Kupplung vom Fahrzeugmotor auf den Antriebsstrang eines Fahrzeugs ein Antriebsmoment übertragen wird und die Standbremse des Fahrzeugs gelöst wird. Hierbei wird das Anfahrmoment so hoch wie das vorher vom Fahrer eingestellte Bremsmoment gewählt.

In der US5427196A ist ein Verfahren zum Betreiben eines Hybridkraftfahrzeugs beschrieben, bei dem nach einer gewissen Zeitspanne von einem elektrischen Hill-Holder auf eine Bremse gewechselt wird, um ein Überhitzung der Elektromaschine zu vermeiden.

Die aus dem Stand der Technik bekannten Verfahren zur dynamischen Bestimmung des Anfahrmomentes sind kompliziert und benötigen einen erheblichen Aufwand.

Der vorliegenden Erfindung liegt die Aufgabe zugrunde, ein Verfahren zur Ermittlung des Anfahrmomentes bei einem Hybridfahrzeug umfassend einen Verbrennungsmotor und eine Elektromaschine, wobei der Verbrennungsmotor vom Antriebsstrang durch Öffnen einer Kupplung abkoppelbar ist, anzugeben, durch dessen Durchführung das Anfahrmoment auf einfache Weise bestimmt werden kann. Insbesondere soll die Notwendigkeit zusätzlicher Bauteile entfallen.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird vorgeschlagen, das Anfahrmoment dadurch zu ermitteln, dass bei einem Haltevorgang des Fahrzeugs, bei abgekoppeltem Verbrennungsmotor bevor die Betriebsbremse eingelegt wird, das Haltemoment erfasst wird, wobei das erfasste Haltemoment dem minimalen erforderlichen Anfahrmoment entspricht.

Die Differenz zwischen dem aufgebrachten Moment und dem erfassten Haltemoment, d.h. das Überschussmoment dient demnach ausschließlich dem Anfahren bzw. der Beschleunigung des Fahrzeugs. In vorteilhafter Weise wird das Anfahrmoment ohne die Notwendigkeit einer aufwendigen Steigungs- und Massebestimmung mit hoher Genauigkeit ermittelt.

Zur Erfassung des Haltemoments des Fahrzeugs wird gemäß der Erfindung die Elektromaschine, deren Abtrieb mit dem Getriebeeingang direkt oder über ein Summierungsgetriebe verbunden ist, derart angesteuert, dass der Stillstand des Fahrzeugs erhalten bleibt, wobei aus dem bekannten Zusammenhang zwischen dem Moment der Elektromaschine und den elektrischen Größen am Wechselrichter der Elektromaschine das Haltemoment bestimmt wird. Für den Fall, dass der Abtrieb der Elektromaschine bzw. des Summierungsgetriebes mittels einer Kupplung mit dem Getriebeeingang verbunden ist, ist diese Kupplung geschlossen.

Der Wert des Haltemomentes wird vorzugsweise in einem nicht flüchtigen Speicher der Steuerung gespeichert, sodass er bei einem erneuten Start des Fahrzeugs zum Verlassen der Halteposition bzw. Parkposition verwendet werden kann; bei einer erneuten Erfassung des Haltemomentes, was bei einem erneuten Halten des Fahrzeugs der Fall sein kann, wird der Wert überschrieben.

Gemäß einer vorteilhaften Weiterbildung der Erfindung kann vorgesehen sein, dass in Abhängigkeit von der Fahrstrategie und dem Wert des erfassten Haltemomentes rein elektrisch oder mit zugeschaltetem Verbrennungsmotor angefahren wird, wobei für den Fall, dass der Verbrennungsmotor durch Schließen der zwischen dem Verbrennungsmotor und der Elektromaschine angeordneten Kupplung zugeschaltet werden soll gemäß der Erfindung bereits beim Tür-Schließsignal der Verbrennungsmotor gestartet werden kann, wenn er abgeschaltet ist.

Wenn beispielsweise der Wert des Haltemomentes geringer ist, als das Moment, das vom Elektromotor zur Verfügung gestellt werden kann, und eine geringe Beschleunigung erwünscht ist erfolgt das Anfahren im rein elektrischen Modus. Für den Fall, dass das erfasste Haltemoment höher ist, als das maximale Moment des Elektromotors, wird der Verbrennungsmotor zugeschaltet, um den Anfahrvorgang durchzuführen.

Durch die erfindungsgemäße Konzeption wird der minimale Wert des erforderlichen Anfahrmomentes auf einfache Weise mit hoher Genauigkeit ermittelt, ohne die Notwendigkeit zusätzlicher Bauteile, wie beispielsweise Neigungssensoren, wobei auch die Notwendigkeit der Durchführung einer Massebestimmung des Fahrzeugs entfällt. In vorteilhafter Weise kann das hier vorgestellte Verfahren bei einem Fahrzeug umfassend einen integrierten Startergenerator (ISG) mit einer zwischen dem Verbrennungsmotor und der Elektromaschine des Startergenerators angeordneten Kupplung durchgeführt werden.

## Patentansprüche

1. Verfahren zur Ermittlung des Anfahrmomentes bei einem Hybridfahrzeug umfassend eine Betriebsbremse und einen Antriebsstrang mit einem Verbrennungsmotor und einer Elektromaschine, wobei der Verbrennungsmotor vom Antriebsstrang durch Öffnen einer Kupplung abkoppelbar ist, **dadurch gekennzeichnet, dass** das Anfahrmoment **dadurch** ermittelt wird, dass bei einem Haltevorgang des Fahrzeugs, bei abgekoppeltem Verbrennungsmotor bevor die Betriebsbremse eingelegt wird, das Haltemoment erfasst wird, wobei das erfasste Haltemoment dem minimalen erforderlichen Anfahrmoment entspricht.

2. Verfahren zur Ermittlung des Anfahrmomentes bei einem Hybridfahrzeug, nach Anspruch 1, **dadurch gekennzeichnet, dass** zur Erfassung des Haltemoments des Fahrzeugs die Elektromaschine, deren Abtrieb mit dem Getriebeeingang direkt oder über ein Summierungsgetriebe verbunden ist, derart angesteuert wird, dass der Stillstand des Fahrzeugs erhalten bleibt, wobei aus dem bekannten Zusammenhang zwischen dem Moment der Elektromaschine und den elektrischen Größen am Wechselrichter der Elektromaschine das Haltemoment bestimmt wird.

3. Verfahren zur Ermittlung des Anfahrmomentes bei einem Hybridfahrzeug, nach Anspruch 2, **dadurch gekennzeichnet, dass** in Abhängigkeit von der Fahrstrategie und dem Wert des Haltemoments rein elektrisch oder mit zugeschaltetem Verbrennungsmotor angefahren wird.

4. Verfahren zur Ermittlung des Anfahrmomentes bei einem Hybridfahrzeug, nach Anspruch 3, **dadurch gekennzeichnet, dass**, für den Fall, dass der Verbrennungsmotor durch Schließen der zwischen dem Verbrennungsmotor und der Elektromaschine angeordneten Kupplung zugeschaltet werden soll, bereits beim Tür-Schließsignal der Verbrennungsmotor gestartet werden kann, wenn er zu diesem Zeitpunkt abgeschaltet ist.

5. Verfahren zur Ermittlung des Anfahrmomentes bei einem Hybridfahrzeug, nach Anspruch 1, 2, 3 oder 4 **dadurch gekennzeichnet, dass** der Wert des Haltemomentes in einem nicht flüchtigen Speicher der Steuerung gespeichert wird, sodass er bei einem erneuten Start des Fahrzeugs verwendet werden kann.

## Claims

1. Method for determining the starting torque in a hybrid vehicle comprising a service brake and a drive train having an internal combustion engine and an electric machine, wherein the internal combustion engine can be decoupled from the drive train by opening a clutch, **characterized in that** the starting torque is determined by detecting the holding torque in a holding process of the vehicle with the internal combustion engine decoupled before the service brake is engaged, wherein the detected holding torque corresponds to the minimum required starting torque.

2. Method for determining the starting torque in a hybrid vehicle according to Claim 1, **characterized in that**, in order to detect the holding torque of the vehicle, the electric machine whose output is connected directly to the transmission input or via a summing gear is actuated in such a way that the stationary state of the vehicle is maintained, wherein the holding torque is determined from the known relationship between the torque of the electric machine and the electrical variables at the power inverter of the electric machine.

3. Method for determining the starting torque in a hybrid vehicle according to Claim 2, **characterized in that** starting is carried out purely electrically or with the internal combustion engine connected depending on the driving strategy and the value of the holding torque.

4. Method for determining the starting torque in a hybrid vehicle according to Claim 3, **characterized in that** if the internal combustion engine is to be connected by closing the clutch which is arranged between the internal combustion engine and the electric machine, the internal combustion engine can already be started when the door closing signal occurs if the internal combustion engine is switched off at this point in time.

5. Method for determining the starting torque in a hybrid vehicle according to Claim 1, 2, 3 or 4, **characterized in that** the value of the holding torque is stored in a non-volatile memory of the controlling means so that it can be used when the vehicle is started again.

## Revendications

1. Procédé pour déterminer le couple de démarrage dans un véhicule hybride, comprenant un frein de service et une chaîne cinématique avec un moteur à combustion interne et un moteur électrique, le moteur à combustion interne pouvant être désaccouplé de la chaîne cinématique par ouverture d'un embrayage, **caractérisé en ce que** le couple de démarrage est déterminé par le fait que, lors d'une opération d'arrêt du véhicule, avec le moteur à combustion interne désaccouplé avant de serrer le frein de service, on détecte le couple d'arrêt, et le couple d'arrêt détecté correspond au couple de démarrage minimal requis.

2. Procédé pour déterminer le couple de démarrage dans un véhicule hybride selon la revendication 1, **caractérisé en ce que** pour détecter le couple d'arrêt du véhicule, le moteur électrique, dont la prise de force est reliée directement ou par le biais d'une transmission d'addition à l'entrée de la boîte de vitesse, est commandé de telle sorte que l'immobilisation du véhicule soit conservée, et à partir de la relation connue entre le couple du moteur électrique et les grandeurs électriques au niveau de l'onduleur du moteur électrique, on détermine le couple d'arrêt.

3. Procédé pour déterminer le couple de démarrage dans un véhicule hybride selon la revendication 2, **caractérisé en ce qu'**en fonction de la stratégie de conduite et de la valeur du couple d' arrêt, le démarrage est effectué de manière purement électrique ou avec le raccordement du moteur à combustion interne.

4. Procédé pour déterminer le couple de démarrage dans un véhicule hybride selon la revendication 3, **caractérisé en ce que** dans le cas où le moteur à combustion interne doit être raccordé par fermeture de l'embrayage disposé entre le moteur à combustion interne et le moteur électrique, le moteur à combustion interne peut déjà être démarré au signal de fermeture de porte, s'il était coupé à cet instant.

5. Procédé pour déterminer le couple de démarrage dans un véhicule hybride selon la revendication 1, 2, 3 ou 4, **caractérisé en ce que** la valeur du couple d'arrêt est mémorisée dans une mémoire non volatile de la commande, de sorte qu'elle puisse être utilisée pour un nouveau démarrage du véhicule.
